# EUROPÄISCHE PATENTSCHRIFT

(11) **EP 3 311 973 B1**
(45) Veröffentlichungstag und Bekanntmachung des Hinweises auf die Patenterteilung: **04.12.2019**
(21) Anmeldenummer: 17196649.2
(22) Anmeldetag: 16.10.2017
(51) Int. Cl.: B29C 45/40

(54) **MEHRSPINDELAUSWERFER MIT ÜBERLASTSICHERUNG**
MULTI-SPINDLE LAUNCHER WITH OVERLOAD PROTECTION
ÉJECTEUR MULTIBROCHE DOTÉ DU DISPOSITIF DE PROTECTION CONTRE LES SURCHARGES

(30) Priorität: 18.10.2016 DE 102016119847
(43) Veröffentlichungstag der Anmeldung: 25.04.2018
(73) Patentinhaber: Arburg GmbH + Co KG, 72290 Loßburg (DE)
(72) Erfinder: Duffner, Eberhardt, 72181 Starzach (DE); Bletscher, Rainer, 72270 Baiersbronn (DE); Krötz, Martin, 72275 Alpirsbach (DE)
(74) Vertreter: Reinhardt, Harry

(56) Entgegenhaltungen:
- DE-A1- 10 121 024
- DE-A1-102004 005 209
- US-A- 5 804 224

## Beschreibung

Die Erfindung betrifft eine Auswerfervorrichtung für Spritzgießmaschinen zur Verarbeitung von Kunststoffen und anderer plastifizierbarer Massen, wie keramische oder pulverige Massen nach dem Oberbegriff des Anspruches 1 sowie ein Verfahren zur Montage einer Auswerfervorrichtung nach dem Oberbegriff des Anspruches 12.

Auswerfervorrichtungen werden regelmäßig an Spritzgießmaschinen verwendet. Nach einem Spritzgussvorgang kann das spritzgegossene Formteil nicht immer einfach entformt werden, da es beispielsweise eine bestimmte Form aufweist und/oder in der Spritzgießform kleben bzw. hängen bleibt. Um das Entformen des Formteils aus der Spritzgießform zu ermöglichen, drückt die Auswerfervorrichtung bzw. ein Teil der Auswerfervorrichtung gegen das Formteil und löst es so aus der Spritzgießform, wodurch die komplette Entformung des Formteils aus der Spritzgießform erfolgt.

Zum Abbau von Trägheitsmomenten ist in der DE 10 2004 005 209 A1 eine Schutzvorrichtung für einen Spindelantrieb offenbart, wobei ein elastisches Element an wenigstens einem Ende der Spindel und/oder der Mutter zwischen dem Spindelantrieb und einer der Baugruppen angeordnet ist. Das elastische Element dient als Sicherungselement und weist für den Fall eines Überschreitens einer durch die vorgegebene Federkraft des elastischen Elements bestimmten Nennkraft des Spindelantriebs einen Auslauf im Bereich des Spindelantriebs zum Abbau bestehender Trägheitsmomentüberschüsse auf. Die Federkraft wirkt dabei in Bewegungsrichtung der dort nur einen Spindel, die insofern beim Einbau auch nicht parallel zu anderen Spindeln justiert werden muss.

Eine Auswerfervorrichtung für eine Spritzgießmaschine mit zwei Anschlagflächen ist in der DE 10 2013 005 556 A1 offenbart. Eine Überwachungsvorrichtung mit einem elektronischen Speicher überwacht das Verfahren der ersten Anschlagfläche relativ zur zweiten Anschlagfläche unter Berücksichtigung der Federkennlinie, welche als Funktion F(x) des Verfahrwegs x der ersten Anschlagfläche relativ zur zweiten Anschlagfläche im elektronischen Speicher abgelegt ist. Die zugrunde liegende Erkenntnis beruht auf einer Näherung des mechanischen Verhaltens des Antriebsstranges bei einem mechanischen Anschlag als lineare Feder. Die Absicherung des Spindelantriebs erfolgt damit sensorisch.

Um eine schnelle Stellbewegung als auch eine große Kraftwirkung zu erzielen, ist in der DE 101 21 024 A1 eine Auswerfervorrichtung für eine Kunststoffspritzgießmaschine offenbart. Die Auswerfervorrichtung weist eine in Richtung des Antriebselements verfahrbare Hydroeinheit auf, welche als Kraftübersetzer mit zwei Kolben und einem Zwischenteil, die einen Druckraum einschließen, ausgeführt ist. Der kleinere Kolben ist mit dem Antriebselement mechanisch so verbunden, dass für eine Stellbewegung die Hydroeinheit als Ganzes verfahrbar ist. Weiterhin ist zur Ausübung einer hohen Kraft durch den größeren Kolben das Zwischenteil gegen Verschiebungen relativ zu einem Gestell blockierbar. Dabei werden unterschiedliche Ausprägungen der Dämpfung in Form von Spiral- und Tellerfedern eingesetzt. Die Auswerfervorrichtung erhält aber im Wesentlichen durch den Einsatz eines Riemenantriebs (Fig. 28) eine gewisse Nachgiebigkeit.

Aus der DE 195 36 567 A1 ist eine Formschließeinheit mit einer Einrichtung zur Behandlung und/oder Entfernung von Spritzteilen mit einem Betätigungselement, einem Abstützelement und einer Antriebseinheit zum Antrieb des Betätigungselements bekannt. Die Antriebseinheit treibt elektromechanisch das Betätigungselement an und bildet zusammen mit dem Abstützelement und dem Betätigungselement eine in sich geschlossene und für sich von der Formschließeinheit abnehmbare bauliche Einheit. Bei solchen Antriebseinheiten wird der Hub vom Anwender bestimmt, sodass es in Folge von Fehlbedienungen und/oder Fehleinstellungen der Hubwege zu Beschädigungen der Antriebseinheit und/oder weiterer Elemente der Formschließeinheit bei einer Überlast kommen kann. Weiterhin können Fehler des Hubweges auch vom Antrieb selbst ausgehen oder von Fehleinstellungen eines Reglers.

Um Antriebseinheiten vor einer Überlast und somit vor Beschädigungen zu sichern, ist aus der DE 10 2008 057 072 A1 eine Antriebsvorrichtung für Spritzgießmaschinen mit Überlastsicherung bekannt. Eine Unterbrechungseinrichtung im Antriebsstrang in Form eines Scherbolzens unterbricht bei Erreichen einer bestimmten, auf die Unterbrechungseinrichtung einwirkenden mechanischen Belastung den Antriebsstrang und schaltet den Motor ab. Jedoch gibt es bei dieser Lösung keine verlässliche, einfache und erhöhte Sicherung bei Überlast. Falls die Unterbrechungseinrichtung versagt oder es beispielsweise zu einer Fehlfunktion des Motors kommt und sich dieser nicht abschaltet, würde ein kompletter ungedämpfter Aufprall erfolgen.

Aus der US 5 804 224 A ist eine Verschiebungsvorrichtung für eine elektrisch bedienbare Spritzgießmaschine offenbart. Durch die Verwendung von Spindelantrieben, deren Motoren an einer beweglichen oder an einer stationären Platte angebracht werden, erfährt die bewegliche Platte aufgrund der Tatsache, dass der Antrieb ohne ein weiteres Kraftübertragungselement auskommt, weniger Nachlauf beim Schließen. Durch die Verwendung von insgesamt weniger Bauteilen für die Verschiebungseinrichtung wird zudem die Trägheit der Vorrichtung verringert. Zum Vergleich zu der Verschiebungsvorrichtung wird zudem noch eine klassische Lösung mit zwei Kugelrollspindeln mit Kopplung über einen Antriebsriemen dargestellt.

Weiterhin wird von manchen Anwendern das gezielte "Dagegenfahren", ein gezielter Aufprall bzw. "Crashen" der Auswerfervorrichtung gegen die Spritzgießform oder gegen Elemente der Formschließeinheit benutzt, um das Formteil von der Spritzgießform durch Stöße zu lockern und so zu entformen, wodurch Beschädigungen an der Auswerfervorrichtung, der Spritzgießform und/oder Elementen der Formschließeinheit resultieren können.

Ausgehend von diesem Stand der Technik liegt der vorliegenden Erfindung die Aufgabe zugrunde, eine verlässliche, einfache und erhöhte Sicherung der Auswerfervorrichtung bei Überlast zu gewährleisten.

Dies wird mit einer Auswerfervorrichtung gemäß den Merkmalen des Anspruches 1 sowie mit einem Verfahren zur Montage einer Auswerfervorrichtung mit den Merkmalen des Anspruches 11 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Auswerfervorrichtung weist wenigstens eine gegenüber einem Auswerferkreuz, bewegliche Auswerferplatte auf. Die Auswerferplatte ist in einer Bewegungsrichtung der Auswerferplatte mittels Kraftübertragung durch wenigstens einen Antriebsstrang antreibbar und linear bewegbar, welcher als Spindelantrieb eine Spindelmutter und eine Spindel sowie wenigstens einen Motorumfasst. Dabei ist der Antriebsstrang bei einer Bewegung der Auswerferplatte über elastische Mittel in der Vorwärts- und Rückwärtsbewegung abgefedert. Erfindungsgemäß sind mehrere Spindelantriebe vorgesehen sind, die über wenigstens ein Getriebe mit dem Motor gekoppelt sind, wobei der Antriebsstrang bei einer Bewegung der Auswerferplatte mit den Spindeln zugeordneten elastischen Mitteln abgefedert ist, die für die Aufnahme großer Kräfte im Falle einer Überlast wenigstens einen Bolzen elastisch lagern. Dadurch ergibt sich eine verlässliche, einfache und erhöhte Sicherung der Auswerfervorrichtung gegenüber einer Überlast. Dies bedeutet in diesem Zusammenhang, dass selbst im Falle eines Aufpralls während der Bewegung der Auswerferplatte, der Aufprall nicht komplett ungedämpft erfolgt. Gleichzeitig wird eine spielfreie bzw. schlupffreie Kopplung mehrerer Spindelantriebe über ein Getriebe an einen Motor und an die Auswerferplatte gewährleistet, die sich auch bei Bewegung nicht verändert, sondern erhalten bleibt. Damit ergibt sich eine direkt angetriebene Auswerfereinheit mit Anschlagabsicherung in beiden Richtungen. Prinzipiell lässt sich die Erfindung nicht nur auf Auswerfervorrichtungen, sondern auch auf andere Vorrichtungen übertragen, die wenigstens einen Antriebsstrang mit vorzugsweise wenigstens einer Spindeleinheit aufweisen.

Vorteilhaft für eine gleichförmige Bewegung sind die Spindeln radial feststehend an der Auswerferplatte gelagert, während die Spindelmuttern drehbar an dem Auswerferkreuz gelagert sind. Prinzipiell denkbar ist aber auch, dass beispielsweise die Spindelmuttern feststehen und die Spindeln durch eine radiale Bewegung eine axiale Bewegung ausführen.

Um selbst bei einer nichtparallelen Fahrt der Auswerfervorrichtung eine Absicherung gegen Beschädigungen zu gewährleisten, ist vorteilhaft jede Spindel in der Vorwärts- und/oder Rückwärtsbewegung der beweglichen Auswerferplatte für sich jeweils, unabhängig von anderen Spindeln, über elastische Mittel abgefedert. Jede Spindel kann so vorteilhaft separat gefedert werden und individuell auf eine variable Überlast im Einzelstrang reagieren, sodass eine parallele Führung mit Einzelstrangfederung gewährleistet ist.

Vorteilhaft für eine direkte Federung der Spindeln wirkt die Kraft der elastischen Mittel bei einer Federung der Spindeln mittels der den Spindeln zugeordneten elastischen Mittel entgegengesetzt der ursprünglichen Bewegungsrichtung der Spindeln. Ein weiterer Vorteil ist, dass für eine mittelbare Federung benötigte Bauteile, welche z.B. zur "Umlenkung" der Kraft benötigt werden, wegfallen oder diese Bauteile durch z.B. die hohe Krafteinwirkung nicht verschleißen oder beschädigt werden. Ferner werden so auch Kosten für diese Bauteile eingespart, da sie z.B. gar nicht benötigt werden oder nicht so oft gewartet werden müssen. Auch wird ein Verschleiß oder eine Beschädigung für Bauteile vermieden, über welche, im Falle einer mittelbaren Federung, eine "Umlenkung" der Kraft erfolgen würde.

Der Bolzen ist vorzugsweise für eine einfache Absicherung und Dämpfung bei Überlast und einer Aufnahme der wirkenden Kräfte an der Auswerferplatte angebracht. Prinzipiell denkbar ist aber auch eine Anbringung des Bolzens beispielsweise an dem Auswerferkreuz oder einem Formträger.

Das Auswerferkreuz begrenzt die Vorwärts- und/oder Rückwärtsbewegung in wenigstens einer Bewegungsrichtung, wodurch vorteilhaft eine Beschädigung von wichtigen Maschinenbauteilen, wie beispielsweise der Spritzgießform und/oder dem Formträger vermieden wird.

Für eine sichere und exakte Anlenkung des Überlastschutzes ist es von Vorteil, wenn die Auswerferplatte wenigstens einen Anschlagdeckel aufweist, welcher an der Auswerferplatte angebracht ist und die Spindeln zur Kraftübertragung für die Bewegung der Auswerferplatte in wenigstens einer Richtung der Bewegungsrichtung fixiert. Der Spindelkopf ist am Anschlagdeckel fixiert und sonst gegen die Kraft der elastischen Mittel beweglich.

Der Anschlagdeckel weist wenigstens ein Sicherungsmittel zur vorteilhaften Sicherung des Anschlagdeckels gegen Verdrehung auf.

Um die Belastung auf den Antriebsstrang und/oder die Auswerferkräfte zu erfassen, ist im Kraftfluss des Antriebstrangs vorzugsweise wenigstens ein Kraftsensor vorgesehen. Derartige Kraftsensoren sind vorzugsweise im Bereich der elastischen Mittel oder im Bereich der Ankopplung des Auswerfers an die Auswerferplatte angebracht.

Zur exakten und spielfreien Kopplung der Spindelantriebe sind zur Vorspannung der elastischen Mittel bei der Montage der Auswerfervorrichtung vorzugsweise wenigstens eine Hülse und wenigstens ein Befestigungsmittel vorgesehen. Ein weiterer Vorteil ist, dass beim Abstimmen der Spindeln aufeinander nicht gegen die Vorspannkraft der elastischen Mittel gearbeitet werden muss. Weiterhin vorteilhaft ist, dass bei der Justage der Auswerferplatte bezüglich der Spindelantriebe nicht gegen die Federkraft der elastischen Mittel gedrückt werden muss, da diese mittels der Hülse und des Befestigungsmittels vorgespannt sind.

Um im Falle einer Überlast noch ausreichend Dämpfungsvermögen zu haben, ist vorteilhaft die Kraft der elastischen Mittel höher als die der maximalen Auswerferkraft.

Um die Lastzahl der Spindeln möglichst gut auszunutzen und die Lebensdauer der Spindeln zu optimieren, sind vorzugsweise die Spindelantriebe miteinander über das Getriebe gekoppelt.

Die Aufgabe wird zudem von einem Verfahren zur Montage einer Auswerfervorrichtung mit den Merkmalen des Anspruches 11 gelöst. Um eine verlässliche, einfache erhöhte Sicherung gegen Überlast zu erhalten, wird wenigstens ein elastisches Mittel mittels wenigstens einer Hülse und Befestigungsmitteln an der Auswerferplatte vorgespannt, wodurch sich ein Freiraum für die freie Montage des Spindelantriebs und die jeweilige Justierung der Spindeln ergibt.

Um dabei ergänzend eine präzise und spielfreie Einstellung der Spindelantriebe unter Kopplung über wenigstens ein Getriebe mit dem Motor zu gewährleisten, werden die Spindeln in dem Freiraum mithilfe des vorgespannten elastischen Mittels und wenigstens eines Anschlagdeckels in wenigstens einer Bewegungsrichtung fixiert.

Darüberhinaus ist es auch von Vorteil, wenn zur besseren Fixierung der Anschlagdeckel mittels wenigstens eines Sicherungsmittels gegen Verdrehung gesichert wird.

Damit die Spindeln vorteilhaft eine definierte Endlage einnehmen, werden nach der Sicherung mit dem als Schwerspannstift ausgebildeten Sicherungsmittel die Befestigungsmittel entfernt, sodass die elastischen Mittel gegen die Spindeln drücken.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvollerer Weise miteinander kombinierbar und können durch Erläutern der Sachverhalte aus der Beschreibung und durch Details aus den Figuren ergänzt werden, wobei weitere Ausführungsvarianten der Erfindung aufgezeigt werden.

### Kurzbeschreibung der Figuren

Im Folgenden wird die Erfindung anhand eines in den beigefügten Figuren dargestellten Ausführungsbeispiels näher erläutert. Es zeigen:
- Fig. 1: eine schematische perspektivische Ansicht von schräg oben einer Formschließeinheit mit der erfindungsgemäßen Auswerfervorrichtung,
- Fig. 2: eine perspektivische Ansicht von schräg oben der Auswerfervorrichtung gemäß Figur 1,
- Fig. 3: eine mittige horizontale Schnittansicht der Auswerfervorrichtung,
- Fig. 4: eine perspektivische Schnittansicht eines Details der Auswerfervorrichtung im Bereich der Lagerung des Spindelkopfs.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

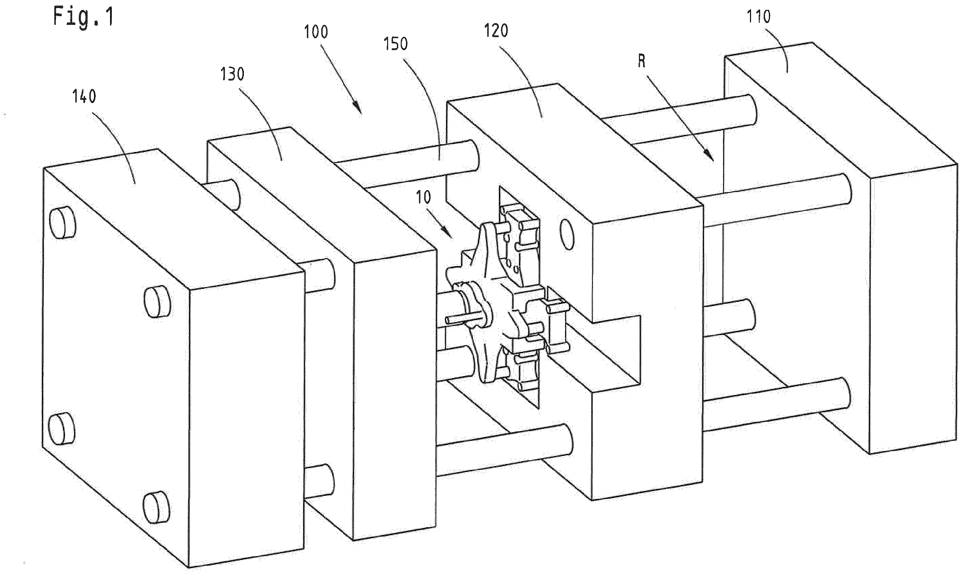

Fig. 1 zeigt schematisch eine perspektivische Ansicht einer Formschließeinheit 100 von schräg oben für eine Spritzgießmaschine zur Verarbeitung von Kunststoffen und anderen plastifizierbaren Massen wie keramischen oder pulverigen Massen mit einem ersten, vorzugsweise stationären Formträger 110, einem zweiten, vorzugsweise beweglichen Formträger 120, welcher mit dem ersten, vorzugsweise stationären Formträger 110 einen Formspannraum R definiert, einer Abstützplatte 130 und einer Basisplatte 140, welche alle zusammen über Holme 150 als Kraftübertragungselemente zur Übertragung der beim Spritzgießen auftretenden Kräfte miteinander verbunden sind. Alternative Kraftübertragungselemente wie z.B. um den Formspannraum R herum geführte Bügel können ebenso statt der Holme verwendet werden. Üblicherweise ist der Formschließeinheit in Figur 1 von der rechten Seite her eine Plastifiziereinheit zugeordnet, die zeichnerisch nicht dargestellt ist. Für ein Entformen des in einem Spritzzyklus hergestellten Formteils aus dem Formspannraum R nach einem Spritzgussvorgang ist eine Auswerfervorrichtung 10 vorgesehen, welche vorzugsweise an dem zweiten, vorzugsweise beweglichen Formträger 120 angebracht ist und diesen bei Betätigung des Auswerfermechanismus durchgreift. Die Auswerfervorrichtung 10 ist damit zusammen mit dem beweglichen Formträger 120 gegenüber dem stationären Formträger 110 beweglich. Prinzipiell denkbar ist aber auch eine Anbringung der Auswerfervorrichtung 10 zum Beispiel an dem ersten, vorzugsweise stationären Formträger 110 oder auch an einer zeichnerisch nicht dargestellten Spritzgießform.

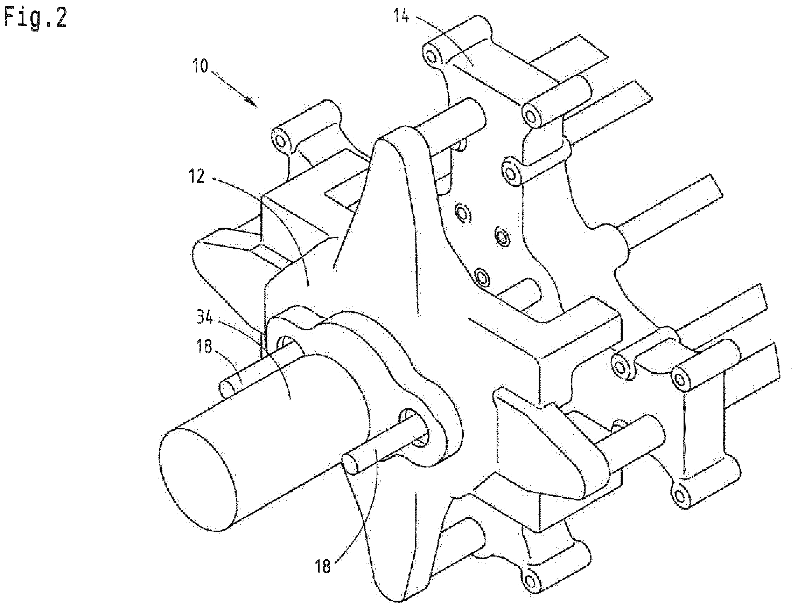

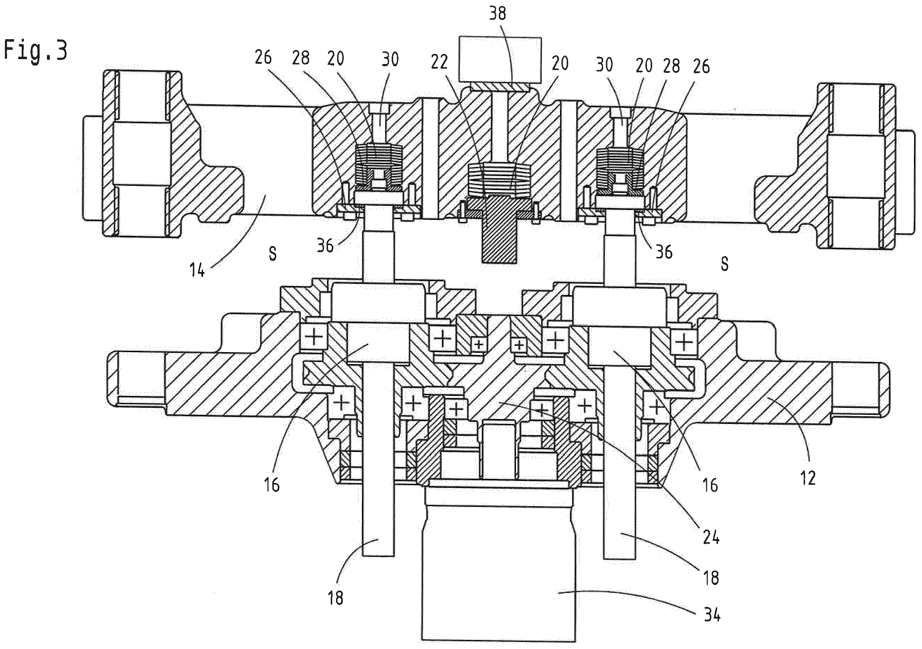

Durch Betätigung des Auswerfermechanismus der Auswerfervorrichtung 10 bewegt sich gemäß Fig. 2 eine Auswerferplatte 14 gegenüber einem Auswerferkreuz 12 und durchgreift den zweiten, vorzugsweise beweglichen Formträger 120 so, dass das Formteil aus der Form herausgedrückt und dadurch entformt werden kann. Die Auswerfervorrichtung 10 weist dazu wenigstens einen Antriebsstrang auf, welcher wenigstens einen Motor 34, ein Getriebe 24 und mehrere, im Ausführungsbeispiel zwei Spindelantriebe S mit wenigstens je einer Spindelmutter 16 und je einer Spindel 18 umfasst. Der Motor 34 betätigt gemäß Fig. 3 über das im Ausführungsbeispiel als Stirnradgetriebe ausgebildete Getriebe 24 die Spindelantriebe S und kann somit weiterhin zentral an der Auswerfervorrichtung 10, vorzugsweise dem Auswerferkreuz 12 angebracht werden, wodurch weniger Platz benötigt wird und sich eine bessere Zugänglichkeit ergibt. Durch das mehrspindlige System ist vorteilhaft die Krafteinleitung auf das Auswerferkreuz 12, insbesondere bei einem asymmetrischen Auswerfen, deutlich besser als mit nur einem Spindelantrieb S. Im Gegensatz zu beispielsweise einem Riemenantrieb ergeben sich ferner mittels des Spindelantriebs S eine höhere Lebensdauer sowie ein geringerer Wartungsaufwand. Dabei werden mehrere parallel justierte und gedämpfte Spindeln 18 vorzugsweise schlupffrei bzw. "hart" über das Getriebe 24 gekoppelt.

Fig. 3 zeigt einen horizontalen Schnitt durch die Auswerfervorrichtung 10 in Höhe der Lagerung der Spindeln. Im Ausführungsbeispiel wird die Auswerferplatte 14 mit Hilfe des Antriebsstrangs entlang einer Bewegungsrichtung der Auswerferplatte 14 mittels Kraftübertragung in der Darstellung der Fig. 3 nach oben oder unten linear bewegt und angetrieben, wobei der Antriebsstrang bei einer Bewegung der Auswerferplatte 14 in ihrer Bewegungsrichtung über elastische Mittel 20 abgefedert ist. Kommt es beispielsweise während der Bewegung der Auswerferplatte 14 zu einem Aufprall der Auswerferplatte 14 gegen die Spritzgießform oder gegen den zweiten, vorzugsweise beweglichen Formträger 120, werden die elastischen Mittel 20 elastisch verformt und dämpfen somit die Aufprallkraft. Dadurch ergibt sich eine verlässliche, einfache und erhöhte Absicherung der Auswerfereinheit 10 bezüglich einer Überlast. Vorzugsweise wird jede Spindel 18 in Bewegungsrichtung separat gedämpft und kann so individuell auf variable Überlast im Einzelstrang reagieren. Die Spindel 18 muss also im normalen Betrieb ortsfest mit der Auswerferplatte 14 verbunden sein und trotzdem eine Dämpfung in Bewegungsrichtung erlauben. Diese Kombination von Dämpfung im Einzelstrang und harter Kopplung mit einem Stirnradgetriebe erfordert allerdings ein spezielles Montageverfahren.

Im Ausführungsbeispiel gemäß Fig. 3 sind die Spindeln 18 radial feststehend an der Auswerferplatte 14 gelagert und die Spindelmuttern 16 drehbar an dem Auswerferkreuz 12 gelagert. Durch Drehung der Spindelmuttern 16 erfolgt eine axiale Bewegung der Spindeln 18. Denkbar ist aber auch, dass die Spindelmuttern 16 feststehen und sich die Spindeln 18 drehen.

Bei Kraftübertragung ist der Antriebstrang im Ausführungsbeispiel gemäß Fig.3 in der Vorwärtsbewegung mit den Spindeln 18 zugeordneten elastischen Mitteln 20 abgefedert. Prinzipiell möglich ist aber auch eine derartige Abfederung während einer Rückwärtsbewegung.

Vorzugsweise ist jede Spindel 18 in der Vorwärts- und/oder Rückwärtsbewegung der beweglichen Auswerferplatte 14 für sich jeweils, unabhängig von anderen Spindeln 18, über elastische Mittel 20 abgefedert. Jede Spindel 18 ist somit für sich abgefedert und kann so individuell auf eine variable Überlast im Einzelstrang reagieren. Dies ist besonders bei einem asynchronen Auf- und/oder Zufahren der Auswerferplatte 14 von Vorteil, sodass eine parallele Führung mit Einzelstrangfederung gewährleistet ist. Ferner erfolgt so eine individuelle Absicherung der Spindeln 18 bei einer nichtparallelen Fahrt der Auswerferplatte 14.

Vorzugsweise wirkt für eine direkte Federung der Spindeln 18 mittels der den Spindeln zugeordneten elastischen Mittel 20 entgegengesetzt der ursprünglichen Bewegungsrichtung der Spindeln. Bewegen sich die Spindeln 18 in Fig. 3 nach oben, stoßen die Spindeln 18 irgendwann gegen die den Spindeln zugeordneten elastischen Mittel 20. Die Federkraft der elastischen Mittel 20 wirkt damit gegen die Bewegung der Spindeln 18.

Im Ausführungsbeispiel ist der Antriebstrang in der Rückwärtsbewegung mit elastischen Mitteln 20 abgefedert, die wenigstens einen Bolzen 22 elastisch lagern. Denkbar ist hier ebenfalls eine Abfederung während einer Vorwärtsbewegung. Im Ausführungsbeispiel ist der Bolzen 22 an der Auswerferplatte 14 angebracht. Eine Anbringung des Bolzens 22 beispielsweise an dem Auswerferkreuz 12 ist ebenfalls denkbar. Soll die Auswerferkraft erfasst werden, kann z.B. auf der dem Bolzen 22 gegenüberliegenden Seite der Auswerferplatte 14 im für die Ankopplung des Auswerfers vorgesehenen Bereich ein Kraftsensor 38 vorgesehen werden.

Das Auswerferkreuz 12 begrenzt vorzugsweise die Vorwärts- und/oder Rückwärtsbewegung des Bolzens 22 in wenigstens einer Bewegungsrichtung. Bewegt sich die Auswerferplatte 14 auf das Auswerferkreuz 12 zu, kommt es irgendwann zu einem Aufprall. Der Bolzen 22 stößt gegen das Auswerferkreuz 12, wobei die Aufprallkraft auf den Bolzen 22 übertragen wird, welcher wiederum durch die elastischen Mittel 20 abgefedert wird und somit die Kraftübertragung des Aufpralls abdämpft.

Im Ausführungsbeispiel gemäß Fig. 3 weist die Auswerferplatte 14 wenigstens einen Anschlagdeckel 26 auf, welcher an der Auswerferplatte 14 angebracht ist und die Spindeln 18 zur Kraftübertragung für die Bewegung der Auswerferplatte 14 in wenigstens einer Richtung der Bewegungsrichtung fixiert. Die Spindeln 18 bzw. deren Spindelköpfe sind an den Anschlagsdeckel 26 durch die elastischen Mittel 20 angelegt, sodass der Anschlagdeckel 26 die Spindeln 18 vorzugsweise entlang der Richtung hin zum Anschlagsdeckel 26 fixiert, sodass eine Rückwärtsbewegung der Spindeln 18 über die Anschlagdeckel 26 auf die Auswerferplatte 14 übertragen wird. Ferner sind die Spindeln 18 vorzugsweise entlang der entgegengesetzten Richtung gegen die elastischen Mittel 20 beweglich.

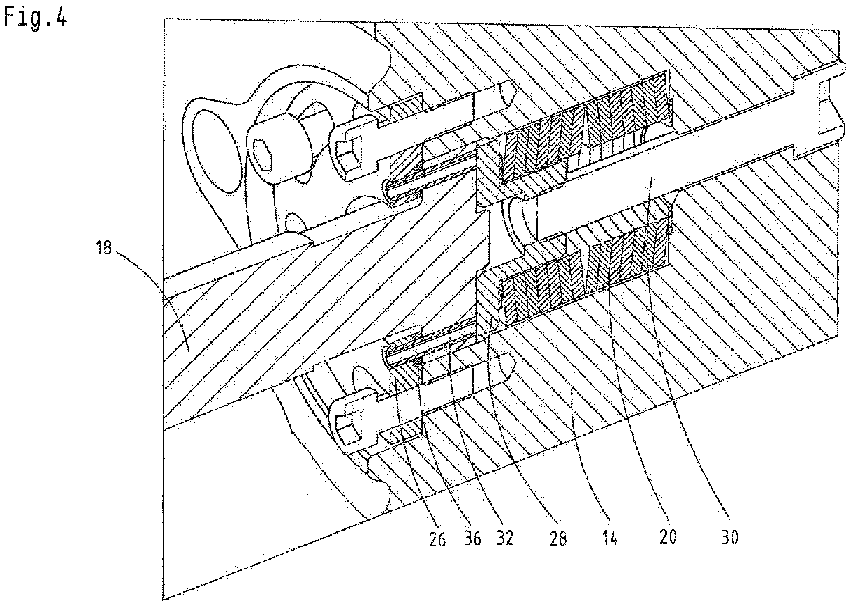

Der Anschlagdeckel 26 weist vorzugsweise gemäß Fig. 4 wenigstens ein Sicherungsmittel 32 auf. Das Sicherungsmittel ist z.B. als Schwerspannstift ausgeführt und sichert den Spindelkopf gegen Verdrehung. Dazu wird der Anschlagdeckel 26 gemäß Fig. 4 über Schrauben mit der Auswerferplatte 14 verbunden und die Sicherungsmittel 32 verhindern das der Spindelkopf sich unkontrolliert verdrehen kann. So wird eine sichere und stabile Wirkverbindung zwischen Spindel 18, Anschlagdeckel 26 und Auswerferplatte 14 gewährleistet. Im Bereich des Anschlagdeckels 26 kann ferner ein Kraftsensor 36 z.B. als Unterlegscheibe vorgesehen sein, um die Kräfte im Antriebsstrang zu erfassen und mittels einer zeichnerisch nicht dargestellten Steuereinheit ggf. auch für weitere Regeleingriffe auszuwerten.

Für die Montage der Auswerfervorrichtung 10 sind gemäß Fig. 4 zur Vorspannung der elastischen Mittel 20 wenigstens eine Hülse 28 und wenigstens ein Befestigungsmittel 30 vorgesehen. Dies erleichtert ein Abstimmen bzw. Justieren der Spindeln 18 aufeinander und damit die Einstellung der Parallelität der Auswerferplatte zur Trennebene der Spritzgießform, da nicht gegen die Vorspannkraft der elastischen Mittel 20 gearbeitet werden muss, sondern die elastischen Mittel 20 mittels der Hülse 28 und des Befestigungsmittels 30 vorgespannt sind.

Zur Erzielung einer verlässlichen und sicheren Dämpfung im Falle eines Aufpralls ist vorzugsweise die Kraft der elastischen Mittel 20 höher ist als die maximale Auswerferkraft.

Die im Ausführungsbeispiel zwei Spindelantriebe S sind miteinander über das Getriebe 24 gekoppelt, welches z.B. als ein Stirnradgetriebe ausgeführt ist. Vorteilhaft sind die Kraft und die Geschwindigkeit der Auswerfervorrichtung 10 durch die Getriebeübersetzung aufeinander abgestimmt. Durch die "harte" Kopplung der Spindelantriebe S über das Stirnradgetriebe ergibt sich vorteilhaft im Ergebnis ein schlupffreier Antrieb.

Zur Montage der Auswerfervorrichtung 10 mit der beweglichen Auswerferplatte 14, dem wenigstens einem Antriebsstrang, welcher wenigstens einen Motor 34, wenigstens ein Getriebe 24 und mehrere Spindelantriebe S mit je einer Spindelmutter 16 und je einer Spindel 18 umfasst, durch den die Auswerferplatte 14 in Bewegungsrichtung der Auswerferplatte 14 mittels Kraftübertragung antreibbar und linear bewegbar ist, wird wenigstens ein elastisches Mittel 20 mittels wenigstens einer Hülse 28 und Befestigungsmitteln 30 an der Auswerferplatte 14 vorgespannt, wodurch sich ein Freiraum für die Montage der Spindelantriebe S ergibt. Dieser Freiraum ist erforderlich, um die parallele Einstellung der Position der Spindeln 18 ohne den Gegendruck der Dämpfungsmittel wie der elastischen Mittel 20 zu ermöglichen.

So können mehrere parallel justierte und gedämpfte Spindeln 18 vorzugsweise schlupffrei bzw. "hart" über das Getriebe 24 gekoppelt werden. Vorzugsweise jede Spindel 18 wird in Bewegungsrichtung separat gedämpft und kann so individuell auf variable Überlast im Einzelstrang reagieren. Die Spindel 18 ist also im normalen Betrieb ortsfest mit der Auswerferplatte 14 verbunden und erlaubt trotzdem eine Dämpfung in Bewegungsrichtung. Diese Kombination von Dämpfung im Einzelstrang und harter Kopplung mit einem Stirnradgetriebe erfordert allerdings dieses spezielle Montageverfahren.

Im Ausführungsbeispiel werden die Spindeln 18 in dem Freiraum mit Hilfe des vorgespannten elastischen Mittels 20 und wenigstens eines Anschlagdeckels 26 in wenigstens einer Bewegungsrichtung fixiert. Die Spindeln 18 liegen auf den Anschlagdeckeln 26 auf und werden so entlang dieser Bewegungsrichtung fixiert. Weiterhin sind die Spindeln 18 entlang der anderen Bewegungsrichtung entgegen bzw. gegenüber den elastischen Mitteln 20 beweglich. Der Spindelkopf der Spindeln 18 wird vorzugsweise mittels wenigstens eines Sicherungsmittels 32, welches beispielsweise als Schwerspannstift ausgeführt ist, gegen Verdrehung gesichert. Dabei kann bedarfsweise auch ein Kraftsensor 36 eingebaut werden. Nach Sicherung mit dem Sicherungsmittel 32 werden vorzugsweise die Befestigungsmittel 30 entfernt, sodass die elastischen Mittel 20 gegen die Spindeln 18 drücken. Dies gewährleistet eine optimale Kopplung und Dämpfung der Spindeln 18 an die Auswerferplatte 14 im Falle eines Aufpralls.

### Bezugszeichenliste

- 10: Auswerfervorrichtung
- 12: Auswerferkreuz
- 14: Auswerferplatte
- 16: Spindelmutter
- 18: Spindel
- 20: elastische Mittel
- 22: Bolzen
- 24: Getriebe
- 26: Anschlagdeckel
- 28: Hülse
- 30: Befestigungsmittel
- 32: Sicherungsmittel
- 34: Motor
- 36, 38: Sensor
- 100: Formschließeinheit
- 110: erster, vorzugsweise stationärer Formträger
- 120: zweiter, vorzugsweise beweglicher Formträger
- 130: Abstützplatte
- 140: Basisplatte
- 150: Holme
- R: Formspannraum
- S: Spindelantriebe

## Patentansprüche

1. Auswerfervorrichtung (10) für eine Spritzgießmaschine zur Verarbeitung von Kunststoffen und anderen plastifizierbaren Massen wie keramischen und pulverförmigen Massen, mit
- wenigstens einem Auswerferkreuz (12),
- wenigstens einer gegenüber dem Auswerferkreuz (12) beweglichen Auswerferplatte (14),
- wenigstens einem Antriebsstrang, welcher als Spindelantrieb (S) eine Spindelmutter (16) und eine Spindel (18) sowie einen Motor (34) umfasst und durch den die Auswerferplatte (14) in einer Bewegungsrichtung der Auswerferplatte (14) mittels Kraftübertragung antreibbar und linear bewegbar ist, wobei der Antriebsstrang bei einer Bewegung der Auswerferplatte (14) in ihrer Bewegungsrichtung über elastische Mittel (20) in der Vorwärts- und Rückwärtsbewegung abgefedert ist,
**dadurch gekennzeichnet, dass** mehrere Spindelantriebe vorgesehen sind, die über wenigstens ein Getriebe (24) mit dem Motor (34) gekoppelt sind, und dass der Antriebsstrang bei einer Bewegung der Auswerferplatte (14) mit den Spindeln (18) zugeordneten elastischen Mitteln (20) abgefedert ist, die wenigstens einen Bolzen (22) elastisch lagern.

2. Auswerfervorrichtung nach Anspruch 1, **dadurch gekennzeichnet, dass** die Spindeln (18) radial feststehend an der beweglichen Auswerferplatte (14) gelagert sind und dass die Spindelmuttern (16) drehbar an dem Auswerferkreuz (12) gelagert sind.

3. Auswerfervorrichtung nach einem der vorhergehenden Ansprüche, **dadurch gekennzeichnet, dass** jede Spindel (18) in der Vorwärts- und/oder Rückwärtsbewegung der Auswerferplatte (14) für sich jeweils, unabhängig von anderen Spindeln (18) über elastische Mittel (20) abgefedert ist.

4. Auswerfervorrichtung nach Anspruch 3, **dadurch gekennzeichnet, dass** bei einer Federung der Spindeln (18) mittels der den Spindeln (18) zugeordneten elastischen Mittel (20) die Kraft der elastischen Mittel (20) entgegengesetzt der ursprünglichen Bewegungsrichtung der Spindeln (18) wirkt.

5. Auswerfervorrichtung nach einem der vorhergehenden Ansprüche, **dadurch gekennzeichnet, dass** der wenigstens eine elastisch gelagerte Bolzen (22) an der Auswerferplatte (14) angebracht ist.

6. Auswerfervorrichtung nach Anspruch 5, **dadurch gekennzeichnet, dass** das Auswerferkreuz (12) die Vorwärts- und/oder Rückwärtsbewegung des Bolzens (22) in wenigstens einer Bewegungsrichtung begrenzt.

7. Auswerfervorrichtung nach einem der vorhergehenden Ansprüche, **dadurch gekennzeichnet, dass** die Auswerferplatte (14) wenigstens einen an der Auswerferplatte (14) angebrachten Anschlagdeckel (26) aufweist, welcher die Spindeln (18) zur Kraftübertragung für die Bewegung der Auswerferplatte (14) in wenigstens einer Richtung der Bewegungsrichtung fixiert und vorzugsweise wenigstens ein Sicherungsmittel (32) aufweist.

8. Auswerfervorrichtung nach einem der vorhergehenden Ansprüche, **dadurch gekennzeichnet, dass** im Kraftfluss des Antriebstrangs wenigstens ein Kraftsensor (36, 38) angeordnet ist.

9. Auswerfervorrichtung nach einem der vorhergehenden Ansprüche, **dadurch gekennzeichnet, dass** zur Vorspannung der elastischen Mittel (20) bei der Montage der Auswerfervorrichtung (10) wenigstens eine Hülse (28) und wenigstens ein Befestigungsmittel (30) vorgesehen sind.

10. Auswerfervorrichtung nach einem der vorhergehenden Ansprüche, **dadurch gekennzeichnet, dass** die Kraft der elastischen Mittel (20) höher ist als die maximale Auswerferkraft.

11. Verfahren zur Montage einer Auswerfervorrichtung (10) mit
- wenigstens einem Auswerferkreuz (12),
- wenigstens einer gegenüber dem Auswerferkreuz (12) beweglichen Auswerferplatte (14),
- wenigstens einem Antriebsstrang, welcher wenigstens einen Motor (34) und als Spindelantrieb (S) eine Spindelmutter (16) und eine Spindel (18) umfasst und durch den die Auswerferplatte (14) in Bewegungsrichtung der Auswerferplatte (14) mittels Kraftübertragung antreibbar und linear bewegbar ist,
- wobei der Antriebsstrang bei einer Bewegung der Auswerferplatte (14) über elastische Mittel (20) in der Vorwärts- und Rückwärtsbewegung abgefedert wird,
**dadurch gekennzeichnet, dass** der Antriebsstrang über den Spindeln (18) zugeordnete elastische Mittel (20) abgefedert wird, die wenigstens einen Bolzen (22) elastisch lagern, und
dass zur Kopplung mehrerer Spindelantriebe (S) über wenigstens ein Getriebe (24) mit dem Motor (34) wenigstens ein elastisches Mittel (20) mittels wenigstens einer Hülse (28) und Befestigungsmitteln (30) an der Auswerferplatte (14) vorgespannt wird, wodurch sich ein Freiraum für die Montage des Spindelantriebs (S) und die jeweilige Justierung der Spindeln (18) ergibt.

12. Verfahren nach Anspruch 11, **dadurch gekennzeichnet, dass** die Spindeln (18) in dem Freiraum mit Hilfe des vorgespannten elastischen Mittels (20) und wenigstens eines Anschlagdeckels (26) in wenigstens einer Bewegungsrichtung fixiert werden.

13. Verfahren nach Anspruch 11 oder 12, **dadurch gekennzeichnet, dass** ein Spindelkopf der Spindeln (18) mittels wenigstens eines Sicherungsmittels (32) gegen Verdrehung gesichert wird.

14. Verfahren nach Anspruch 13, **dadurch gekennzeichnet, dass** nach Sicherung mit dem Sicherungsmittel (32) die Befestigungsmittel (30) entfernt werden, sodass die elastischen Mittel (20) gegen die Spindeln (18) drücken.

## Claims

1. An ejector device (10) for an injection moulding machine for processing plastics and other plasticisable materials, such as ceramic and powder materials, having
- at least one ejector cross (12),
- at least one ejector plate (14) that is movable in relation to the ejector cross (12),
- at least one drive train which, as the spindle drive (S), includes a spindle nut (16) and a spindle (18) and a motor (34), and by which the ejector plate (14) is drivable and linearly movable in a direction of movement of the ejector plate (14) by means of force transmission, wherein, in the event of a movement of the ejector plate (14), the drive train is cushioned in its direction of movement, in the forward and rearward direction, by way of resilient devices (20),
**characterised in that** a plurality of spindle drives are provided that are coupled to the motor (34) by way of at least one gear (24), and **in that**, in the event of a movement of the ejector plate (14), the drive train is cushioned by resilient devices (20) that are associated with the spindles (18) and on which there is resiliently mounted at least one bolt (22).

2. An ejector device according to Claim 1, **characterised in that** the spindles (18) are mounted on the movable ejector plate (14) such that they are radially fixed, and **in that** the spindle nuts (16) are mounted rotatably on the ejector cross (12).

3. An ejector device according to one of the preceding claims, **characterised in that** each spindle (18) is cushioned in the forward and/or rearward movement of the ejector plate (14) individually, independently of other spindles (18), by way of resilient devices (20).

4. An ejector device according to Claim 3, **characterised in that**, when the spindles (18) are cushioned by the resilient devices (20) associated with the spindles (18), the force of the resilient devices (20) acts in opposition to the original direction of movement of the spindles (18).

5. An ejector device according to one of the preceding claims, **characterised in that** the at least one resiliently mounted bolt (22) is mounted on the ejector plate (14).

6. An ejector device according to Claim 5, **characterised in that** the ejector cross (12) limits the forward and/or rearward movement of the bolt (22) in at least one direction of movement.

7. An ejector device according to one of the preceding claims, **characterised in that** the ejector plate (14) has at least one abutment cover (26) that is mounted on the ejector plate (14) and fixes the spindles (18) in position for the purpose of transmitting force for the movement of the ejector plate (14) in at least one direction of the direction of movement, and preferably has at least one securing device (32).

8. An ejector device according to one of the preceding claims, **characterised in that** at least one force sensor (36, 38) is provided in the line of force of the drive train.

9. An ejector device according to one of the preceding claims, **characterised in that**, for the purpose of biasing the resilient devices (20) when the ejector device (10) is installed, at least one sleeve (28) and at least one fastening device (30) are provided.

10. An ejector device according to one of the preceding claims, **characterised in that** the force of the resilient devices (20) is greater than the maximum ejector force.

11. A method for installing an ejector device (10), having
- at least one ejector cross (12),
- at least one ejector plate (14) that is movable in relation to the ejector cross (12),
- at least one drive train which includes at least one motor (34) and, as the spindle drive (S), includes a spindle nut (16) and a spindle (18), and by which the ejector plate (14) is drivable and linearly movable in the direction of movement of the ejector plate (14) by means of force transmission,
- wherein, in the event of a movement of the ejector plate (14), the drive train is cushioned in the forward and rearward movement by way of resilient devices (20),
**characterised in that** the drive train is cushioned by way of resilient devices (20) that are associated with the spindles (18) and on which there is resiliently mounted at least one bolt (22), and
**in that**, for the purpose of coupling a plurality of spindle drives (S) to the motor (34) by way of at least one gear (24), at least one resilient device (20) is biased against the ejector plate (14) by means of at least one sleeve (28) and fastening devices (30), as a result of which a free space is produced for the installation of the spindle drive (S) and the respective adjustment of the spindles (18).

12. A method according to Claim 11, **characterised in that** the spindles (18) are fixed in position in the free space, in at least one direction of movement, with the aid of the biased resilient device (20) and at least one abutment cover (26).

13. A method according to Claim 11 or 12, **characterised in that** a spindle head of the spindles (18) is secured to prevent rotation by means of at least one securing device (32).

14. A method according to Claim 13, **characterised in that** after securing using the securing device (32), the fastening devices (30) are removed such that the resilient devices (20) press against the spindles (18).

## Revendications

1. Dispositif éjecteur (10) pour une machine de moulage par injection pour l'élaboration de matières plastiques et autres masses plastifiables telles que des masses céramiques et pulvérulentes, comportant
- au moins une croix d'éjection (12)
- au moins une plaque d'éjection (14) déplaçable par rapport à la croix d'éjection (12),
- au moins une chaîne cinématique, laquelle comprend en tant qu'entraînement de broche (S), un écrou de broche (16) et une broche (18) ainsi qu'un moteur (34) et grâce à laquelle la plaque d'éjection (14) peut être entraînée et déplacée linéairement dans une direction de déplacement de la plaque d'éjection (14) au moyen d'une transmission de force,
dans lequel la chaîne cinématique est amortie dans le déplacement vers l'avant et vers l'arrière au moyen de moyens élastiques (20) lors d'un déplacement de la plaque d'éjection (14) sans sa direction de déplacement,
**caractérisé en ce que** plusieurs entraînements de broche sont prévus, lesquels sont couplés au moteur (34) au moyen d'au moins un entraînement (24) et **en ce que** la chaîne cinématique est amortie lors d'un déplacement de la plaque d'éjection (14) avec les moyens élastiques (20) associés aux broches (18), lesquels logent élastiquement au moins une cheville (22).

2. Dispositif éjecteur selon la revendication 1, **caractérisé en ce que** les broches (18) sont logées fixement radialement sur la plaque d'éjection déplaçable (14) et **en ce que** les écrous de broche (16) sont fixés libres en rotation sur la croix d'éjection (12).

3. Dispositif éjecteur selon l'une des revendications précédentes, **caractérisé en ce que** chaque broche (18) est amortie respectivement à l'aide de moyens élastiques (20) lors du déplacement vers l'avant et/ou vers l'arrière de la plaque d'éjection (14), indépendamment des autres broches (18).

4. Dispositif éjecteur selon la revendication 3, **caractérisé en ce que** lors d'un amortissement des broches (18) à l'aide des moyens élastiques (20) associés aux broches (18), la force des moyens élastiques (20) agit dans le sens opposé à la direction de déplacement initiale des broches (18).

5. Dispositif éjecteur selon l'une des revendications précédentes, **caractérisé en ce que** la ou les cheville(s) (22) logée(s) élastiquement est(sont) montée(s) sur la plaque d'éjection (14).

6. Dispositif éjecteur selon la revendication 5, **caractérisé en ce que** la croix d'éjection (12) limite le déplacement vers l'avant et/ou vers l'arrière de la cheville (22) au moins dans une direction de déplacement.

7. Dispositif éjecteur selon l'une des revendications précédentes, **caractérisé en ce que** la plaque d'éjection (14) présente au moins un couvercle d'arrêt (26) monté sur la plaque d'éjection (14), lequel fixe les broches (18) en vue de la transmission de force pour le déplacement de la plaque d'éjection (14) dans au moins une direction de la direction de déplacement et présente de préférence au moyen un moyen de sécurité (32).

8. Dispositif éjecteur selon l'une des revendications précédentes, **caractérisé en ce qu'**au moins un détecteur de force (36, 38) est disposé dans la ligne de force de la chaîne cinématique.

9. Dispositif éjecteur selon l'une des revendications précédentes, **caractérisé en ce qu'**au moins une douille (28) et au moins un moyen de fixation (30) sont prévus lors du montage du dispositif éjecteur (10) pour la précontrainte des moyens élastiques (20).

10. Dispositif éjecteur selon l'une des revendications précédentes, **caractérisé en ce que** la force des moyens élastiques (20) est supérieure à la force d'éjection maximale.

11. Procédé de montage d'un dispositif éjecteur (10) comportant
- au moins une croix d'éjection (12),
- au moins une plaque d'éjection (14) déplaçable par rapport à la croix d'éjection (12),
- au moins une chaîne cinématique, laquelle comprend au moins un moteur (34) et, en tant qu'entraînement de broche (S), un écrou de broche (16) et une broche (18) et au moyen de laquelle la plaque d'éjection (14) peut être entraînée et déplacée dans la direction de déplacement de la plaque d'éjection (14) par une transmission de force,
- dans lequel la chaîne cinématique est amortie lors d'un déplacement de la plaque d'éjection (14) vers l'avant et l'arrière par des moyens élastiques (20),
**caractérisé en ce que** la chaîne cinématique est amortie par les moyens élastiques (20) associés aux broches (18) et qui logent élastiquement au moins une cheville (22),
**en ce que** pour le couplage de plusieurs entraînements de broche (S) avec le moteur (34) au moyen d'au moins un entraînement (24) au moins un moyen élastique (20) est précontraint au moyen d'au moins une douille (28) et de moyens de fixation (30) au niveau de la plaque d'éjection (14), créant ainsi un espace libre pour le montage de l'entraînement de broche (S) et de l'ajustage respectif des broches (18).

12. Procédé selon la revendication 11, **caractérisé en ce que** les broches (18) sont fixées dans l'espace libre à l'aide du moyen élastique (20) précontraint et d'au moins un couvercle d'arrêt (26) dans au moins une direction de déplacement.

13. Procédé selon la revendication 11 ou 12, **caractérisé en ce qu'**une tête de broche des broches (18) est sécurisée contre la rotation par au moins un moyen de sécurisation (32).

14. Procédé selon la revendication 13, **caractérisé en ce qu'**après la sécurisation avec le moyen de sécurisation (32), les moyens de fixation (30) sont retirés, de sorte que les moyens élastiques (20) appuient contre les broches (18).
